# EUROPÄISCHE PATENTSCHRIFT

(11) **EP 1 046 311 B1**
(45) Veröffentlichungstag und Bekanntmachung des Hinweises auf die Patenterteilung: **16.02.2005**
(21) Anmeldenummer: 98966543.5
(22) Anmeldetag: 15.12.1998
(51) Int. Cl.: H04Q 3/00

(54) **VORRICHTUNG UND VERFAHREN ZUR AUSLAGERUNG EINES TEILS EINES DIENSTLOGIK PROGRAMMS IN EINEM INTELLIGENTEN NETZ**
DEVICE AND METHOD FOR TAKING OUT A PART OF A SERVICE LOGIC PROGRAM IN AN INTELLIGENT NETWORK
PROCEDE ET DISPOSITIF POUR TRANSFERER UNE PARTIE D'UN PROGRAMME DE LOGIQUE DE SERVICE DANS UN RESEAU INTELLIGENT

(30) Priorität: 09.01.1998 DE 19800644
(43) Veröffentlichungstag der Anmeldung: 25.10.2000
(73) Patentinhaber: SIEMENS AKTIENGESELLSCHAFT, 80333 München (DE)
(72) Erfinder: MORITZ, Peter, D-85540 Haar (DE)
(86) Internationale Anmeldenummer: PCT/DE1998/003679
(87) Internationale Veröffentlichungsnummer: WO 1999/035858

(56) Entgegenhaltungen:
- WO-A-97/23988
- WO-A-97/31492
- WO-A-98/00951
- LOW C: "THE INTERNET TELEPHONY RED HERRING" HP LABORATORIES TECHNICAL REPORT, Nr. 96/98, 15. Mai 1996, Seiten 1-15, XP002043669
- LOW C ET AL: "WEBIN - AN ARCHITECTURE FOR FAST DEPLOYMENT OF IN-BASED PERSONAL SERVICES" WORKSHOP RECORD. INTELLIGENT NETWORK. FREEDOM AND FLEXIBILITY: REALISING THE PROMISE OF INTELLIGENT NETWORK SERVICES, 21. April 1996, Seiten 1-12, XP002043670

## Beschreibung

Im Bereich der Telekommunikation wird immer weitgehender Gebrauch gemacht von der Technik der Intelligenten Netze IN. Dabei handelt es sich um ein architekturelles Konzept welches unter anderem Netzbetreibern in einfacher Weise erlaubt, Telekommunikationsdienste für ihre Kunden zu definieren und bereitzustellen. Die Architektur kann auf viele Telekommunikationsnetze angewendet werden, wie zum Beispiel PSTN oder N-ISDN.

In einem Intelligenten Netz gibt es drei wesentliche Funktionale Einheiten:
- Call-handling Functions (z. B. Verbindungsbehandlung, die Basisfunktionen von Telekommunikationsnetzen)
- Service Execution Functions (z. B. Vermittlung, Ressourcensteuerung)
- Service Management Functions SMF (u. a. Entwicklung, Bereitstellung, Verwaltung von IN Diensten)

Ein Ergebnis der SMF ist das Dienstlogik Programm, welches auf einen Service Control Point SCP geladen und dort ausgeführt werden kann. Es ist auch möglich, diese Dienstlogik auf mehrere SCPs zu verteilen, wobei hier jeweils eine komplette Kopie des Dienstlogik Programms verwendet wird. Das Dienstlogik Programm wird ausgeführt, wenn ein Dienstaufruf von einem Dienstbenutzer bei einer Vermittlungsstelle (Service Switching Point SSP) eintrifft.

Ein wichtiger Punkt bei der Erzeugung von Diensten in einem Intelligenten Netz ist die Vergebührung dieser Dienste. Dabei wird von der Dienst Logik eine Gebühreninformation (Charging Ticket) erzeugt, etwa in der Form
TC CONTINUE(FurnishChargingInformation, SendChargingInformation, Connect) (siehe dazu Q.1218). Diese Informationen werden einer zentralen Instanz (Billing Center) zugestellt und dort verarbeitet. Die hierin enthaltenen Daten werden verwendet zur Belastung des Kontos des Kunden oder (etwa im Falle im 'Free Phone') das Konto des Dienst Subscribers oder beider Konten.
Eine Besonderheit dieses Vorgehens ist die Möglichkeit, auch während einer bestehenden Verbindung die aktuelle Vergebührungsrate zu verändern, etwa beim Übertritt in eine neue Tarifzeit, Rabatt bei langen Gesprächen oder ähnlichem.

Aus der Druckschrift WO98/00951 ist bereits ein Verfahren zum Verteilen von Diensten und Dienstprogrammen (Dienstelogik) in Telekommunikationsnetzen bekannt. Der externe Teil der Dienstlogik besteht aus einer Bedienoberfläche für das Endgerät, um eine große Variationsbreite abhängig vom Endgerätetyp abzudecken.

Mit der verstärkten Einführung von Computer Telephony Integration (CTI) und der Weiterentwicklung von verteilten Anwendungen wie Java werden sich in der Zukunft auch die im IN angebotenen Dienste verändern. Dafür wird es notwendig werden, 'intelligentere' Geräte zum Beispiel beim Endbenutzer zu installieren. Um die zusätzlichen Möglichkeiten dieser Geräte auch vollständig nutzen zu können, wird es notwenig sein, das Konzept der Intelligenten Netze zu erweitern.

In der Druckschrift WO 97/31492 ist die Realisierung von Telefondiensten auf Nebenstellenanlagen und in Vermittlungsstellen beschrieben. Eine Verknüpfung mit Datennetzen ist möglich, insbesondere für das oben dargestellte CTI. Hier werden die Dienste jedoch komplett ausgelagert in sogenannten Workstations realisiert.

Auch in dem Artikel "The Internet Telephony Red Herring", (HP Laboratiories Technical Report, Nr. 96/98, 15.Mai 1996, Seiten 1 bis 15) wird ein ähnliches Konzept zur Kombination von Telefonnetz, Internet und den dazugehörigen Diensten angeboten. Eine Steuerlogik vermittelt Dienstanforderungen auf Dienstadressen und triggert die dezentral verteile Dienstelogik, welche als externe, abgeschlossene Einheit ausgebildet ist.

Aufgabe der Erfindung ist es, für Dienstanbieter und Dienstbenutzer in einem Kommunikationsnetz eine flexiblere Möglichkeit zu bieten, die zu einem angebotenen Dienst notwendige Dienstlogik ablaufen zu lassen und die dafür vorgesehene Vergebührung durchzuführen.

Diese Aufgabe wird gelöst, indem ein Verfahren definiert wird, mittels dessen verschiedene Teile einer Dienstlogik auf verschiedenen Instanzen eines Systems verteilt und dort zusammen arbeiten und miteinander kommunizieren können. Es wird eine Vorrichtung angegeben, mittels der ein Kunde eines Intelligenten Netzes bei einem Anbieter einen Dienst nutzen kann, dessen Dienstlogik teilweise zentral beim Dienstanbieter und teilweise ausgelagert zum Beispiel im Endgerät des Kunden läuft.

Durch die Aufteilung der Dienstlogik in einen zentralen und einen dezentralen Teil wird die Definition und Bereitstellung von neuen Diensten möglich. Dem Kunden können zum Beispiel zusätzliche Informationen über Verbindungen zur Verfügung gestellt werden, die weiterverarbeitet oder anderweitig ausgewertet werden können. Momentan bestehende Medienbrüche können vermieden werden. Etwa sucht der Kunde über seinen PC eine Telefonnummer heraus und wählt mittels eines Knopfdruckes am PC sofort die gewünschte Nummer an. Es können sich weitere Nutzungsmöglichkeiten der Verbindungen erschließen, für die ein 'intelligenteres' Endgerät benötigt wird.

Vorteilhafte Ausgestaltungen und Weiterbildungen sind in den Unteransprüchen abgegeben.

Die Aufteilung der Service Logik ergibt sich dabei aus der Art der Logik und des damit realisierten Dienstes. In den meisten Fällen wird es sinnvoll sein, den ausgelagerten Teil der Service Logik auf das Endgerät des Kunden zu legen. Weiterhin ist es sinnvoll, die bereits bestehenden Verbindungen (zum Beispiel ISDN) zwischen der zentralen Instanz und dem ausgelagerten Teil, also etwa dem Endgerät zu nutzen. Besonders berücksichtigt werden muß der Teil der Service Logik, der für die Erzeugung der Gebühreninformation verantwortlich ist.

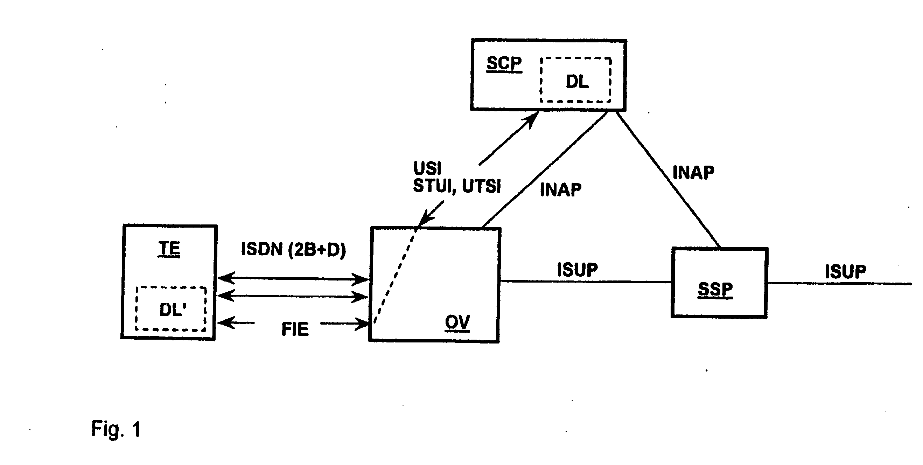

Im folgenden wird die Erfindung anhand von Ausführungsbeispielen erläutert. Dabei zeigt die Figur einen möglichen Aufbau mit einem Teil eines Intelligenten Netzes.

In der Figur ist eine Prinzipanordnung der Verteilung einer Dienstlogik in einem Intelligenten Netz IN und die dafür notwendige Kommunikation zwischen den Teilen der Dienstlogik dargestellt.
Dabei befindet sich der zentrale Teil der Dienstlogik DL im Service Control Point SCP. Der ausgelagerte Teil der entsprechenden Dienstlogik DL' befindet sich in diesem Beispiel auf dem Telekommunikationsendgerät TE des Dienstbenutzers. Durch eine Ortsvermittlung OV sind die beiden Teile der Dienstlogik miteinander verbunden. Dabei ist das Endgerät mit der Ortsvermittlung OV mittels einer ISDN Leitung verbunden. Die Steuerungssignale werden auf dieser Verbindung zum Beispiel mit Facility Information Elements FIE über den D-Kanal der ISDN Leitung übermittelt. Die Ortsvermittlung OV wiederum ist mit dem Service Control Point SCP verbunden, auf dem der zentrale Teil der Dienstlogik läuft. Diese Verbindung geschieht mittels des erweiterten INAP (Intelligent Network Application Protocol). Auf der anderen Seite ist der Dienstenehmner über die Ortsvermittlung auch an einen Vermittlungsknoten des Intelligenten Netzes (Service Switching Point SSP) angeschlossen.

In diesem Fall kann für die Kommunikation des ausgelagerten Teils der Dienstlogik DL' mit dem zentralen Teil der Dienstlogik DL auf dem SCP mit bereits bekannten Kommunikationsmechanismen durchgeführt werden, die für diesen Zweck etwas erweitert werden müssen.

Die Datenkommunikationsverbindung zwischen den ausgelagerten Teilen und dem zentralen Teil der Dienstlogik muß folgenden Ansprüchen gerecht werden:
- beim Anschließen oder Einschalten des Gerätes, welches den ausgelagerten Teil beinhaltet, ist die Verbindung automatisch betriebsbereit,
- hohe Ausfallsicherheit und Recoveryvermögen nach einem Verbindungsausfall,
- Verwendung der existierenden physikalischen Verbindungen des externen Gerätes zum IN,
- parallele Nutzkanäle dürfen nicht beeinflusst werden.

Die Dienstlogik muß dabei folgende Bedingungen erfüllen:
- keine manuellen Eingriffe am Gerät für Administration und Betrieb notwendig,
- Sicherheit gewährleistet, etwa durch eindeutig vergebene Identitäten, dabei sollten die vorhandenen Numerierungen zur Adressierung nutzbar sein,
- geeignet für eine Vielfalt von Gerätetypen und Schnittstellen.

Für den ersten Teil der Strecke, der zum Beispiel über eine vorhandene ISDN Verbindung vom Dienstbenutzer zur Ortsvermittlung führt, können in diesem Fall sogenannte Facility Information Elements FIE verwendet werden. Als Verbindungsweg kann bei ISDN der für Signalisierung vorgesehene D-Kanal verwendet werden. Diese FIE Elemente sind bereits aus der ETS 300 196-1 vorbekannt. Sie erhalten erfindungsgemäß die Aufgabe, als Container für IN Dienste zu fungieren. Der Inhalt dieser FIEs, in der Norm als "Component" bezeichnet, wird "vor"benutzt, um sogenannte "Supplementary Services", also zusätzliche Dienste zu steuern. Die genaue Struktur der Components unterliegt den Regeln von BER und ASN.1. Bei den Definitionen der FIE im Standard ist keine Erweiterung notwendig.

Die User to Service Information (USI) Signalisierung ist bereits für 'Call Unrelated Services' entworfen worden, wie zum Beispiel den Short Message Service. Dabei besteht diese aus zwei Teilen: dem Service-to-User-Information (STUI) Teil und in umgekehrter Richtung dem User-to-Service-Information (UTSI) Teil.
Bisher wurde diese Signalisierung noch nicht verwendet für die Dienstesteuerung. Durch eine Erweiterung des im INAP standardisierten Verfahrens USI kann die Steuerung der Service Logik hier über das bereits vorhandene CCS7 Netz durchgeführt werden.

Folgende Operationen müssen aus der Norm Q.1218 (in einer neueren Generation dann Q.1228, Capability Set CS-2 für Intelligente Netze) übernommen und angepaßt beziehungsweise neu kreiert werden:

| | | |
|---|---|---|
| ReportUTSI | (OV→SCF) | Berichtet UTSI Information Elemente (wie SSF-SCF Interface) |
| RequestReportUTSI | (SCF→OV) | Fordert das Monitoring von UTSI Elementen an (wie SSF-SCF Interface) |
| SendSTUI | (SCF→OV) | Fordert bei der SSF ein STUI Informationselement an (wie ITU-T Q.1228 SSF-SCF) |

Bei dieser Lösung ist man auf die Existenz einer ISDN Verbindung zum Endgerät angewiesen. Um eine größere Vielfalt von Endgeräten und Schnittstellen zu gewährleisten, bietet sich eine weitere Realisierungmöglichkeit an, bestehend aus Java Technologie. Hierfür steht bereits ein Programming Interface bereit, das sogenannte Java Telephony Application Programming Interface JTAPI.
Eine Beschreibung hierfür findet sich etwa unter http://java.sun.com/products/jtapi.

Mit dieser objektorientierten Entwicklungsumgebung im Baukastensystem können in einfacher Weise Applikationen im Telekommunikationsumfeld realisiert werden. Das JTAPI Call Model besteht aus sechs verschiedenen Java Objekten, die jeweils eine konzeptuelle oder physikalische Instanz im der Telekommunikation repräsentieren. Verschiedene Hardwareplattformen und Software Schnittstellen sind abgedeckt, auch ein Security Mechanismus ist bereits vorgesehen.
(Java ist TradeMark von Sun Microsystems)

Die Gebühreninformation wird im folgenden nochmals getrennt betrachtet. Es kann sinnvoll sein, daß ein Gebühreninformationsticket nicht aus der zentralen Instanz erzeugt wird, sondern von dem Teil der Service Logik, der sich im ausgelagerten Teil der Service Logik befindet.

Die Übertragung der Gebührentickets erfolgt nach dem selben Schema, das weiter oben bereits auführlich beschrieben ist. Dabei handelt die Vergebührungsfunktion in Übereinstimmung mit dem Vertrag zwischen Netzbetreiber, Subscriber und Kunden.
Dabei muß jedoch sichergestellt werden, daß keine falschen Tickets an das Billing Center, welches die Tickets dann verarbeitet, gelangt.
Durch herkömmliche Methoden, wie Einfügen einer Signatur, können Verfälschungen verhindert werden.
Eine weitere Notwendigkeit, falsche Tickets zu verhindern, wird durch das Überprüfen aller Gebührentickets durch den zentralen Teil der Service Logik geleistet. So werden die Gebührenticktes des ausgelagerten Teils der Service Logik als "Vorschläge" oder "Entwürfe" betrachtet, die vom zentralen Teil der Service Logik angenommen, modifiziert oder verworfen werden können, bevor sie zur endgültigen Verarbeitung an das Billing Center (die zentrale Instanz, die die Vergebührung des Dienstangebotes überwacht und protokolliert) weitergeleitet werden.
Wenn der zentrale Teil der Service Logik solch ein Gebührenticket erhält, sollte es die Plausibilität der verlangten Vergebührung prüfen. Sofern diese gewährleistet ist, kann das Ticket, mit oder ohne Änderungen, an das Billing Center weitergeleitet werden.
Im Falle, daß die von der ausgelagerten Instanz empfangenen Gebührentickets nicht korrekt sind oder ausbleiben, muß durch den zentralen Teil der Dienstlogik eine Reaktion-ausgelöst werden. Dies kann geschehen durch Übertragungsfehler aber auch durch explizite Manipulation. Mögliche Reaktionen sind zum Beispiel das sofortige Trennen der Verbindung, die Erzeugung eines "Fraud Ticket" oder zumindest das Überschreiben des inkorrekten Tickets.

### Literaturverzeichnis

ETS 300 196-1 (August 1993)
Integrated Services Digital Network (ISDN);
Generic functional protocol for the support of supplementary services; Digital Subscriber Signalling System No. one (DSS1) protocol; Part 1: Protocol specification
ITU-T Recommendation Q.1218 (10/95)
Intelligent Network,
Interface Recommendation for Intelligent Network CS-1

### Abkürzungsverzeichnis

- ASN.1: Abstract Syntax Notation 1
- BER: Basic Encoding Rules
- CCS7: Common Channel Signalling Nr. 7
- CTI: Computer Telephony Integration
- FIE: Facility Information Element
- INAP: Intelligent Network Application Protocol
- ISDN: Integrated Services Digital Network
- ISUP: Integrated Services User Part
- JTAPI: Java Telephony Application Programming Interface
- PSTN: Public Switched Telephone Network
- USI: User to Service Information
- UTSI: User to Service Information
- SCCP: Signalling Connection Control Part
- SCF: Service Control Function
- SCP: Service Control Point
- SMF: Service Management Function
- SSP: Service Switching Point
- STUI: Service to User Information
- TCAP: Transaction Control Application Part

## Patentansprüche

1. Verfahren zur Bereitstellung eines Telekommunikationsdienstes in einem Intelligenten Netz, bestehend aus einer Dienstlogik, bei der
- ein erster Teil der Dienstlogik (DL) in einer zentralen Einheit (SCP) ausgeführt wird und
- ein zweiter Teil der Dienstlogik (DL') außerhalb der zentralen Einheit ausgeführt wird, und
- der zweite Teil der Dienstlogik (DL') einen Vorschlag für die Gebühreninformation an den ersten Teil der Dienstlogik (DL) sendet, und
- in einem zweiten Schritt dieser Vorschlag von der zentralen Einheit überprüft und weiterverarbeitet wird.

2. Verfahren nach Anspruch 1,
**dadurch gekennzeichnet, daß**
der erste Teil der Dienstlogik (DL) bei Empfang eines Gebührenvorschlages durch den zweiten Teil der Dienstlogik (DL') überprüft, ob der Gebührenvorschlag akzeptabel ist und bei einem negativen Ergebnis dieser Prüfung geeignete Maßnahmen zur Überprüfung des zweiten Teils der Dienstlogik (DL') einleitet.

3. Verfahren nach Anspruch 1 oder 2,
**dadurch gekennzeichnet, daß**
der erste Teil der Dienstlogik (DL) bei Empfang eines Gebührenvorschlages durch den zweiten Teil der Dienstlogik (DL') überprüft, ob der Gebührenvorschlag akzeptabel ist und bei einem positiven Ergebnis dieser Prüfung den Gebührenvorschlag weiterleitet an ein für die Vergebührung zuständige Instanz (Billing Center).

4. Verfahren nach Anspruch 1,
**dadurch gekennzeichnet, daß**
bei einem Ausbleiben des Gebührenvorschlags einer der folgenden Schritte unternommen wird:
- sofortiges Trennen der Verbindung,
- Erzeugen eines Fehlertickets,
- Erzeugen eines eigenen Gebührentickets.

5. Endgerät in einem Telekommunikationsnetz, mit
a) Mitteln zum Speichern eines Teiles einer Dienstlogik,
b) Mitteln zur Verarbeitung dieses Teiles der Dienstlogik und
c) Mitteln zur Kommunikation mit einer zentralen Einheit in einem intelligenten Netz die Mittel zum Speichen und Verarbeiten eines weiteren Teiles der Dienstlogik umfaßt,
d) Mitteln zur Erzeugung einer Gebühreninformation, und mit
e) Mitteln zum Senden dieser Gebühreninformation an den in der zentralen Einheit gespeicherten Teil der Dienstlogik, wobei die zentrale Einheit Mittel zum Überprüfen und weiterverarbeiten der Gebühreninformation umfaßt.

6. Endgerät nach Anspruch 5,
**gekennzeichnet durch** ein Application Programming Interface API, daß eine einheitliche horizontale Schnittstelle für den Austausch von IN Nachrichten zwischen der auf dem Endgerät gespeicherten Teil der Dienstelogik und dem im zentralen Teil des Intelligenten Netzes gespeicherten Dienstelogik bietet.

7. Endgerät nach Anspruch 6,
**dadurch gekennzeichnet, daß**
das API in auf Java Technologie basierendem JTAPI realisiert ist.

8. Endgerät nach einem der Ansprüche 5 bis 7,
**dadurch gekennzeichnet, daß** die Verbindung des Endgerätes
zum Telekommunikationsnetz über eine ISDN-Leitung geschieht.

## Claims

1. Method for providing a telecommunication service in an intelligent network, comprising a service logic wherein
- a first part of the service logic (DL) is executed in a central unit (SCP) and
- a second part of the service logic (DL') is executed outside the central unit, and
- the second part of the service logic (DL') sends a proposal for the charging information to the first part of the service logic (DL), and
- in a second step, said proposal is checked and further processed by the central unit.

2. Method according to claim 1,
**characterised in that** the first part of the service logic (DL), on receipt of a charging proposal by the second part of the service logic (DL'), checks whether the charging proposal is acceptable and, in the event of a negative outcome of this check, initiates suitable measures for checking the second part of the service logic (DL').

3. Method according to claim 1 or 2,
**characterised in that** the first part of the service logic (DL), on receipt of a charging proposal by the second part of the service logic (DL'), checks whether the charging proposal is acceptable and, in the event of a positive outcome of this check, forwards the charging proposal to an instance responsible for charging (billing centre).

4. Method according to claim 1, **characterised in that** in the absence of the charging proposal one of the following steps is performed:
- immediate disconnection,
- generation of a fraud ticket,
- generation of its own charging ticket.

5. Terminal in a telecommunication network, having
a) means of storing part of a service logic,
b) means of processing this part of the service logic and
c) means of communicating with a central unit in an intelligent network, said unit incorporating means of storing and processing another part of said service logic,
d) means of generating charging information, and having
e) means of transmitting this charging information to the part of the service logic stored in the central unit, said central unit incorporating means of checking and further processing the charging information.

6. Terminal according to claim 5
**characterised by** an application programming interface API providing a uniform horizontal interface for exchanging IN messages between the part of the service logic stored on the terminal and the service logic stored in the central part of the intelligent network.

7. Terminal according to claim 7,
**characterised in that** the API is implemented in JTAPI based on Java technology.

8. Terminal according to one of claims 5 to 7,
**characterised in that** the connection of the terminal to the telecommunication network is implemented via an ISDN line.

## Revendications

1. Procédé pour la mise à disposition d'un service de télécommunication dans un réseau intelligent, comprenant une logique de service, dans laquelle
- une première partie de la logique de service (DL) est exécutée dans une unité (SCP) centrale et
- une seconde partie de la logique de service (DL') est exécutée à l'extérieur de l'unité centrale, et
- la seconde partie de la logique de service (DL') envoie une proposition pour l'information sur les taxes à la première partie de la logique de service (DL), et
- cette proposition est vérifiée et traitée dans une seconde étape par l'unité centrale.

2. Procédé selon la revendication 1,
**caractérisé en ce que**
la première partie de la logique de service (DL) vérifie en cas de réception d'une proposition de taxe par la seconde partie de la logique de service (DL') si la proposition de taxe est acceptable et, dans le cas d'un résultat négatif de cette vérification, met en oeuvre des mesures appropriées pour la vérification de la seconde partie de la logique de service (DL').

3. Procédé selon la revendication 1 ou 2,
**caractérisé en ce que**
la première partie de la logique de service (DL) vérifie en cas de réception d'une proposition de taxe par la seconde partie de la logique de service (DL') si la proposition de taxe est acceptable et, dans le cas d'un résultat positif de cette vérification, transmet la proposition de taxe à une instance compétente pour la taxation (Billing Center).

4. Procédé selon la revendication 1,
**caractérisé en ce que**
l'une des étapes suivantes est entreprise en cas d'absence de la proposition de taxe :
- interruption immédiate de la liaison,
- génération d'un ticket d'erreur,
- génération d'un ticket de taxe propre.

5. Terminal dans un réseau de télécommunication, comprenant :
a) des moyens pour le stockage d'une partie d'une logique de service,
b) des moyens pour le traitement de cette partie de la logique de service et,
c) des moyens pour la communication avec une unité centrale dans un réseau intelligent, qui comprend des moyens pour le stockage et le traitement d'une autre partie de la logique de service,
d) des moyens pour la génération d'une information sur les taxes, et avec
e) des moyens pour l'envoi de cette information sur les taxes à la partie de la logique de service stockée dans l'unité centrale, l'unité centrale comprenant des moyens pour la vérification et le traitement de l'information sur les taxes.

6. Terminal selon la revendication 5,
**caractérisé par** une Application Programming Interface API, qui offre une interface horizontale homogène pour l'échange de messages IN entre la partie de la logique de service stockée sur le terminal et la logique de service stockée dans la partie centrale du réseau intelligent.

7. Terminal selon la revendication 6,
**caractérisé en ce que**
le API est réalisé dans le JTAPI basé sur la technologie Java.

8. Terminal selon l'une quelconque des revendications 5 à 7,
**caractérisé en ce que**
la liaison du terminal avec le réseau de télécommunication passe par une ligne ISDN.
